## Europäisches Patentamt

(19) **European Patent Office**

**Office européen des brevets**

(11) Veröffentlichungsnummer: **0 250 398**
**B1**

(12) ## EUROPÄISCHE PATENTSCHRIFT

(45) Veröffentlichungstag der Patentschrifft:
**17.01.90**

(21) Anmeldenummer: **86900040.6**

(22) Anmeldetag: **19.12.85**

(86) Internationale Anmeldenummer:
**PCT/CH 85/00177**

(87) Internationale Veröffentlichungsnummer:
**WO 87/03990 (02.07.87 Gazette 87/14)**

(51) Int. Cl. ⁴: **G 09 B 3/04, B 41 L 1/22, B 42 D 15/00**

(54) **VERFAHREN ZUR IRREVERSIBLEN AUFZEICHNUNG, AUFZEICHNUNGSTRÄGER SOWIE ANWENDUNG DES VERFAHRENS ODER DES AUFZEICHNUNGSTRÄGERS.**

(43) Veröffentlichungstag der Anmeldung:
**07.01.88 Patentblatt 88/01**

(45) Bekanntmachung des Hinweises auf die Patenterteilung:
**17.01.90 Patentblatt 90/03**

(84) Bennante Vertragsstaaten:
**AT BE CH DE FR GB IT LI LU NL SE**

(56) Entgegenhaltungen:
**DE-A-1 797 418**
**DE-A-2 531 331**
**US-A-4 248 919**

(73) Patentinhaber: **W RNDLI, Gerhard A.**
**Lerchenbühlstrasse 14**
**CH-6045 Meggen (CH)**

(72) Erfinder: **W RNDLI, Gerhard A.**
**Lerchenbühlstrasse 14**
**CH-6045 Meggen (CH)**

(74) Vertreter: **Troesch, Jacques J., Dipl.-Ing.**
**Walchestrasse 19**
**CH-8035 Zürich (CH)**

LIBERGRAF, STOCKHOLM 1990

EP 0 250 398 B1

## Beschreibung

Die vorliegende Erfindung betrifft ein Verfahren zur Verhinderung einer Aufzeichnungsänderung an einem Aufzeichnungsträger mit zwei, zur Bildung einer Tasche mindestens entlang wesentlicher Randabschnitte miteinander verbundenen Blättern und einer aus einer Taschenöffnung ausziehbaren, zwischen den Blättern liegenden Zwischenblattanordnung, welche bei Aufzeichnen auf das eine und/oder andere der zwei Blätter die Aufzeichnung auf mindestens eines der sich gegenüberliegenden Blätter abbildet, wobei man ein Wiedereinschieben der einmal mindestens abschnittsweise ausgezogenen Zwischenblattanordnung verhindert, sowie einen Aufzeichnungsträger mit zwei zur Bildung einer Tasche mindestens entlang wesentlicher Randabschnitte miteinander verbundenen Blättern, einer aus einer Öffnung der Tasche ausziehbaren Zwischenblattanordnung, die einen Aufzeichnungskontrast bei Aufzeichnen auf den Träger erzeugt, sowie mit einer Sperranordnung, die ein mindestens abschnittsweises Ausziehen der Zwischenblattanordnung aus der Tasche zulässt, ein Wiedereinschieben jedoch verhindert, weiter eine Anwendung des Verfahrens oder des Aufzeichnungsträgers zur Verunmöglichung einer Abänderung einer vorgenommenen Aufzeichnung an Urkundenformularen, Unterrichtsbogen, Kreditformularen, Kreditkarten.

Der Anmelder hat sich, unter Bezugnahme auf seine CH-Patentanmeldung Nr. 2'528/84 - 8, vom 23. 5. 84 freiwillig eingeschränkt und gesonderte Patentansprüche für die Schweiz vorgelegt.

Aus der CH-PS-611 061 (& DE-A-2 531 331) sind Aufgabenblätter bekannt geworden, mit zwei entlang drei Berandungskanten miteinander verbundenen Blättern. Dazwischen ist ein Zwischenblatt, ein Kohlepapier, vorgesehen, welches im vierten Kantenbereich der verbundenen Blätter herausziehbar ist. Auf derartigen Aufgabenblättern wird auf der einen der sich am Zwischenblatt gegenüberliegenden Blattseiten die richtige Lösung einer gestellten Aufgabe aufgedruckt, bei eingelegtem Zwischenblatt von aussen nicht erkenntlich. Ein Schüler löst die gestellte Aufgabe auf einem eigens dazu vorgesehenen Lösungsfeld, wobei seine Aufzeichnung auf besagte mit der richtigen Lösung bedruckte Blattseite durchkopiert wird. Danach entfernt der Schüler das Zwischenblatt, wodurch einerseits die richtige Lösung durch das eine, klarsichtig ausgebildete Blatt erkenntlich wird, andererseits aber eine Korrektur seiner bereits eingetragenen Lösung wie folgt verunmöglicht wird:

Ein Wiedereinschieben des den Aufzeichnungskontrast bewirkenden Zwischenblattes, hier des Kohlepapiers, wird dadurch verunmöglicht, dass letzteres an der Ausziehöffnung um die Kante des einen der Blätter umgelegt ist und in dieser Position durch einen Umlenkfalz gehalten ist. Es kann somit nur um die Kante des einen dieser Blätter herum ausgezogen werden. Ein Wiedereinschieben des Zwischenblattes unter den Umlenkfalz und um die Kante des einen Blattes herum, ist unmöglich.

Dieser Umlenkfalz ist in der Fertigung relativ aufwendig. Zudem müssen Vorkehrungen an der Kante des einen der Blätter, um welche das Zwischenblatt herum ausgezogen wird, vorgesehen werden, die ein Ausreissen dieser Kante bei Ausziehen des Zwischenblattes verhindern. Das Vorsehen der Umlenkfalze, zusammen mit einer Verstärkung der erwähnten Kante ergibt eine unerwünschte lokale Verdickung des Aufzeichnungsträgers, was insbesondere bei Binden einer Vielzahl derartiger Träger zu einem Buch nachteilig ist.

Aus der US-A-4 248 919 ist es weiter bekannt, als Aufzeichnungsträger zwei Blätter vorzusehen, mit einer Zwischenblattanordnung, die, bei Aufzeichnen auf das eine der Blätter, die Aufzeichnung auf eines der sich gegenüberliegenden Blätter abbildet. Die anfänglich entlang wesentlicher Randabschnitte erstellte Verbindung der Blätter wird nach Aufzeichnen gelöst, derart, dass die Blätter nurmehr an einer Seite verbunden bleiben. Durch Aufklappen der Blätter wird ein Abtrennen der Zwischenblattanordnung ermöglicht, nach deren Entfernen die Blätter aufeinander rückgeklappt werden. Eine Verklebung der neuen unmittelbar aneinanderliegenden Seiten der Blätter wird nun erstellt, durch Haftwirksamwerden einer Klebeschicht am einen der Blätter nach deren Freigabe durch die Zwischenblattanordnung. Dieses Vorgehen ist insofern nachteilig, als dass nicht allein durch die Entfernung des Zwischenblattes die haftende Verbindung der Blätter erstellt wird, sondern, dass die Blätter aus der hochgeklappten Lage sorgfältig aufeinander rückgelegt werden müssen. Weiter ist ein abschnittsweises Entfernen der Zwischenblattanordnung nicht möglich, derart, dass eine Aufzeichnungsverbindung nur abschnittsweise erfolgte und Aufzeichnungen auf übrigen Bereichen des Trägers weiterhin möglich wären, wie dies gemäss der CH-PS-611 061 möglich ist.

Die vorliegende Erfindung setzt sich zum Ziel, ausgehend von einem Vorgehen gemäss der CH-PS-611 061, die obgenannten Nachteile, bedingt durch deren mechanische Rückschubsperre für das Zwischenblatt, zu beheben.

Zu diesem Zweck zeichnet sich das eingangs genannte Verfahren nach dem Wortlaut des Anspruchs 1 aus, der eingangs genannte Aufzeichnungsträger nach demjenigen des Anspruchs 5 bzw. (Ansprüche für die Schweiz) nach demjenigen von Anspruch 4.

Die Erfindung wird anschliessend beispielsweise anhand von Figuren erläutert. Es zeigen:

Fig. 1a einen schematischen Querschnitt durch den Aufbau eines erfindungsgemässen Aufzeichnungsträgers,

Fig. 1b den schematischen Aufbau des Aufzeichnungsträgers gemäss Fig. 1a, nach Entfernung des Zwischenblattes,

Fig. 1c eine schematische perspektivische Ansicht des erfindungsgemässen Aufzeichnungsträgers in einer ersten Ausführungsvariante,

Fig. 2a bis 2c einen erfindungsgemässen Aufzeichnungsträger in Aufsicht, mit sukzessiv entferntem Zwischenblatt,

Fig. 3 schematisch eine weitere Ausführungsform eines erfindungsgemässen Aufzeichnungsträgers,

Fig. 4 schematisch eine dritte Ausführungsform eines erfindungsgemässen Aufzeichnungsträgers mit drei Varianten,

Fig. 5 schematisch eine vierte Ausführungsform eines erfindungsgemässen Aufzeichnungsträgers.

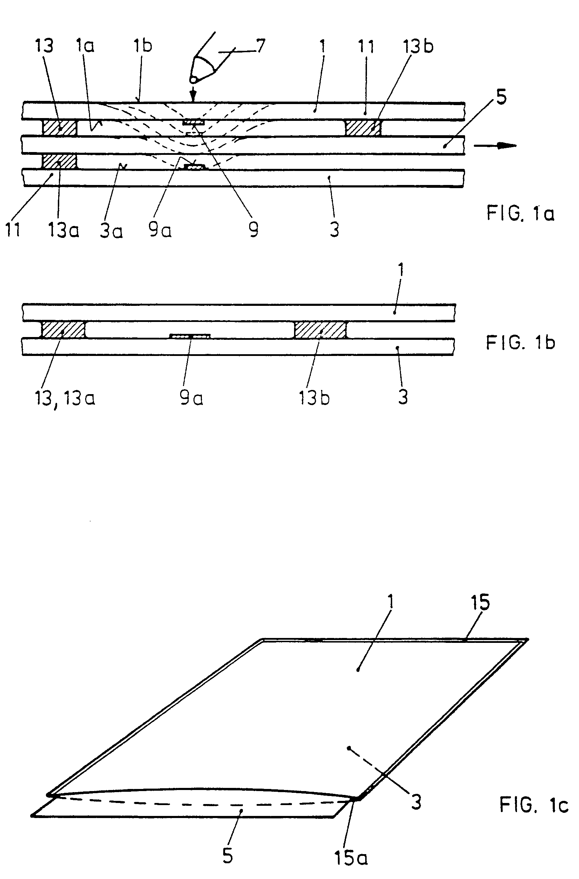

Gemäss Fig. 1a umfasst ein erfindungsgemässer Aufzeichnungsträger, im folgenden auch Schreibbogen genannt, zwei Blätter, ein Oberblatt 1 und ein Unterblatt 3. Zwischen diesen beiden Blättern 1 und 3 ist ein Zwischenblatt 5 vorgesehen. Prinzipiell bezweckt das Zwischenblatt 5 vorerst, dass durch eine Schreibhandlung, wie schematisch mit der Schreibspitze 7 angedeutet, die Schreib- oder Zeichnungsinformation, die der Schreibende von aussen auf das eine Blatt 1 aufbringt, auf mindestens eine der sich am Zwischenblatt 5 gegenüberliegenden Blattseite 1a resp. 3a abgebildet wird oder generell auf eines der Blätter 1, 3 aussen und/oder innen. Dies ist in Fig. 1a schematisch dargestellt. Durch Schreibhandlung, beispielsweise mit der Schreibspitze 7, wie eines Kugelschreibers, wird das von aussen beschriebene Blatt 1 eingedrückt, derart, dass es am Zwischenblatt 5 den Informationskontrast als z. B. Farbschicht 9 aufnimmt, und/oder dass über Eindrücken des extern beschriebenen Blattes 1, damit auch des Zwischenblattes 5, der Informationskontrast, wie bei 9a dargestellt, auf der Innenseite 3a des unteren Blattes 3 aufgenommen wird.

Zwischen den sich über das Zwischenblatt 5 gegenüberliegenden Blattseiten 1a; 3a sind generell mit 11 bezeichnete Haftstellen vorgesehen, die bei eingelegtem Zwischenblatt 5 unwirksam sind, indem sie am Zwischenblatt 5 nicht haften, die jedoch bei entferntem Zwischenblatt 5, wie mit dem Pfeil dargestellt, die beiden sich gegenüberliegenden Blattseiten 1a und 3a praktisch unlösbar verbinden.

An der Blattseite 1a ist generell eine Kleberschicht 13 vorgesehen, welche an besagter Seite 1a haftet, jedoch nicht am Zwischenblatt 5. Der Kleberschicht 13 gegenüberliegend ist an der Seite 3a des Blattes 3 eine entsprechende Schicht 13a vorgesehen, die wohl am Blatt 3 haftet, nicht jedoch am Zwischenblatt 5. Bei Ausziehen des Zwischenblattes 5 kommen die beiden Kleberschichten, wie die erwähnten Komponenten 13 und 13a miteinander in Kontakt, verbinden sich innig und bewirken ein Verkleben der beiden Blätter 1 und 3 in diesem Haftbereich. Es ist dabei durchaus möglich, wie beim Haftbereich 11 rechter Hand dargestellt, das lediglich am einen der beiden Blätter 1, 3, beispielsweise am Blatt 1, eine Kleberschicht 13b vorgesehen wird, die bei Entfernung des Zwischenblattes 5 mit der Oberfläche 3a des Blattes 3 in Kontakt tritt und die beiden Blätter unlösbar, wenigstens zerstörungsfrei nur schwer lösbar, verbindet.

Als Kleber an den Schichten 13a, 13b können folgende Substanzen eingesetzt werden:

– ein Zweikomponentenleim, bestehend z. B. aus einem Härter, wie Polyamin und einem Vorkondensat, wie Expoxydharz.
– ein Aufkleber auf der Basis von Polyacrylaten oder Polyacrylsäureestern, eine Antiadhäsivschicht auf der Basis von Siliconharzen.
– eine Elastomermischung in Wasser dispergiert, nicht klebend, aber in Kontakt mit sich selbst sofort bindend. Als Elastomere können verwendet werden: Isoprene, Styrolbutadien und Styrolisopren und Naturkautschuk.

Es versteht sich im weiteren von selbst, dass die Haftbereiche, beispielsweise mit Kleberschichten, sich punkt- oder linienförmig oder flächig über grössere Bereiche des Bogens erstrecken können. Dabei muss jedoch sichergestellt sein, dass die Kleberschicht so angebracht ist, dass bei eingelegtem Zwischenblatt 5 trotz oder allenfalls dank ihr, mindestens auf eines der beiden Blätter 1 resp. 3 die Abbildung der extern aufgebrachten Schrift erfolgt. Sollen die Schriftzüge, abgebildet nur bei eingelegtem Zwischenblatt 5, wie bei 9 und/oder 9a dargestellt, von aussen sichtbar sein, entweder bereits vor Entfernen des Zwischenblattes 5 gemäss Fig. 1a oder allenfalls erst nach Entfernen des Zwischenblattes 5 gemäss Fig. 1b, so werden zu beschriftende Bereiche des Blattes 1 und/oder des Zwischenblattes 5 und/oder des Blattes 3 so ausgelegt, dass dies in der Konfiguration von Fig. 1a und/oder 1b sichergestellt ist. So wird z. B. der Bereich des Blattes 1 über den zu beschriftenden Bereich bei 9 oder 9a klarsichtig ausgebildet.

In Fig. 1c ist schematisch in perspektivischer Ansicht dargestellt, wie die Blätter 1, 3, 5 bei einer ersten Variante verbunden sind. Die beiden Deckblätter 1 und 3 sind entlang dreier Kanten, wie bei 15 dargestellt, verbunden, beispielsweise verklebt und bilden eine Tasche, so dass das Zwischenblatt 5 an der verbleibenden offenen Kante 15a ausgezogen werden kann.

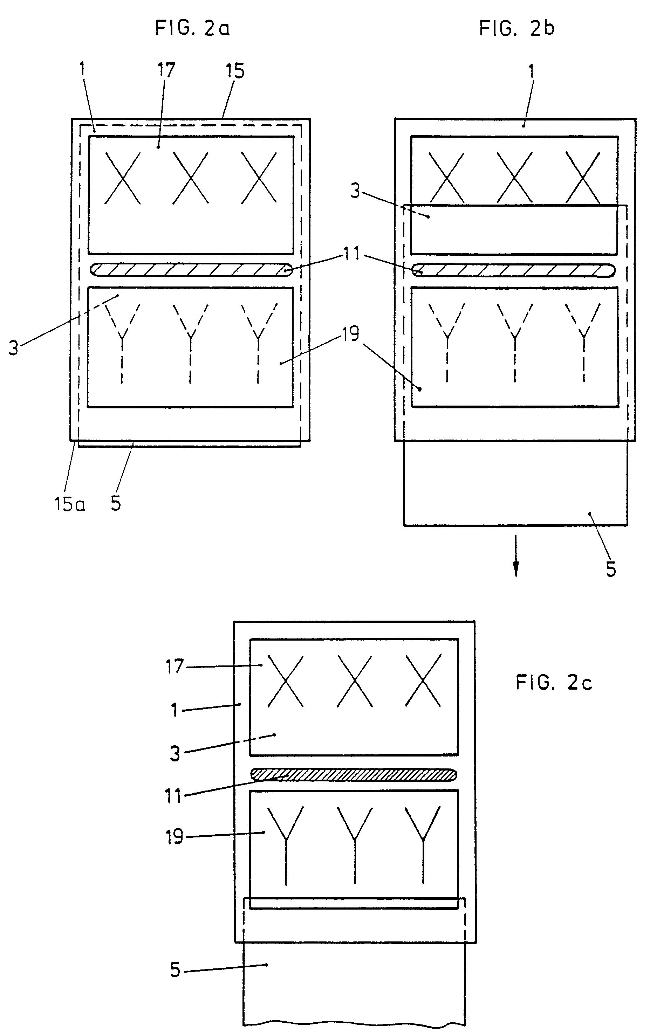

In den Fig. 2a bis 2c ist in Aufsicht schematisch ein erfindungsgemässer Schreibbogen dargestellt, wie er beispielsweise für Lösungsnotier-/-Quittierblätter verwendet wird.

Gemäss Fig. 2a ist die Tasche gemäss Fig. 1c dargestellt, mit eingelegtem Zwischenblatt 5. Beispielsweise auf dem Blatt 1 markiert, ist ein Beschriftungsbereich 17 vorgesehen, auf welchem der Anwender schreiben resp. zeichnen kann. In der Anwendung als Lösungsnotier-/-Quittierblatt notiert er entsprechend einer gestellten Aufgabe die von ihm gefundene Lösung in diesen Beschriftungsbereich 17, was mit XXX angedeutet ist. Danach zieht er, wie in den Fig. 2b und 2c dargestellt ist, das Zwischenblatt 5 zwischen den Blättern 1 und 3 aus. Wie in Fig. 2b dargestellt, bleibt die von ihm gefundene und aufgezeigte Lösung XXX, gemäss den Fig. 1a und b auf einer der sich vormals über das Zwischenblatt 5 gegenüberliegenden Blattseiten 1a, 3a stehen. Allerdings kann nun in dem Bereich des Beschriftungsbereiches 17, in welchem das Zwischenblatt 5 bereits ausgezogen ist, keine Änderung der Beschriftung vorgenommen werden: Die vormals vorgenommene Beschriftung XXX ist irreversibel festgehalten. Auf einem der Blätter 1, 3 ist nun Information YYY vorab vorgesehen, wie z. B. aufgedruckt, welche jedoch von aussen nur erkenntlich oder mindestens nur interpretierbar ist, wenn das Zwischenblatt 5 den derart vorab beschrifteten Informationsbereich freigibt. Dies ist so realisiert, dass gemäss Fig. 1a und b auf der Blattseite 3a diese Information, im Falle eines Lösungsnotier-/-Quittierblattes die richtige Aufgabenlösung, gedruckt wird. Das über diesem Bereich liegende Zwischenblatt 5 ist mindestens dort undurchsichtig und deckt somit dann die richtige Lösung ab. Wird das Zwischenblatt gemäss Übergang von Fig. 2b nach 2c, weiter schliesslich ganz zwischen den Blättern 1, 3 ausgezogen, so wird die richtige Lösung YYY gemäss Fig. 2c extern sichtbar, wozu beispielsweise das Blatt 1 in diesem Bereich 19 mit der vorab vorgesehenen Information durchsichtig ausgebildet ist. Sinnvollerweise werden dabei der Beschriftungsbereich 17 und der Informationsbereich 19 so angeordnet, dass beim Entfernen des Zwischenblattes 5 der Informationsbereich 19 erst extern interpretierbar freigegeben wird, wenn das Zwischenblatt 5 den Beschriftungsbereich 17 bereits vollständig verlassen hat und somit dort eine Korrektur verunmöglicht ist. Zwischen dem Beschriftungsbereich 17 und dem Informationsbereich 19 ist eine Haftstelle 11, beispielsweise mit entsprechenden Klebeschichten gemäss den Fig. 1a und 1b vorgesehen. Sie ist generell so angeordnet, dass das Zwischenblatt 5, nachdem es aus dem Beschriftungsbereich 17 ausgezogen worden ist, nicht mehr dorthin zurückgeschoben werden kann. Ist das Zwischenblatt gemäss Fig. 2c aus besagtem Beschriftungsbereich ausgezogen, so wird die Haftstelle 11 aktiviert und verbindet die beiden Blätter 1 und 3 so, dass sie zerstörungsfrei nur sehr schwer oder überhaupt nicht voneinander lösbar sind. Während die unaktivierte Haftstelle 11 in den Fig. 2a und 2b lose schraffiert dargestellt ist, ist die aktivierte Haftstelle 11 in Fig. 2c dicht schraffiert dargestellt. Auf diese Art und Weise wird erreicht, dass ein Erkennen der vorab vorgesehenen Information, wie der richtigen Lösung YYY erst möglich ist, wenn die vom Anwender aufnotierte Beschriftung, beispielsweise seine eigene Lösung XXX, nicht mehr verändert werden kann.

Es versteht sich weiter von selbst, dass weitere Information auf dem Aufzeichnungsträger vorgesehen werden kann, wie eine Aufgabenstellung, deren Sichtbarkeit durch die Position des Zwischenblattes 5 nicht beeinflusst wird, z. B. aussen auf Blatt 1 gemäss Fig. 1a, 1b aufgedruckt ist, in einem nicht zu beschriftenden Bereich.

Wird der erfindungsgemässe Aufzeichnungsträger gemäss den Fig. 2 realisiert, so besteht keine Sicherheit darüber, dass der Anwender die vorab vorgesehene Information in den Feldern 19 durch Anheben des Blattes 1 gemäss Fig. 1c und des Zwischenblattes 5 nicht einsieht, bevor er seine Aufzeichnung im Feld 17 vornimmt, m.a.W., dass er eine Musterlösung Y einsieht, bevor er selbst die Aufgabe gelöst hat.

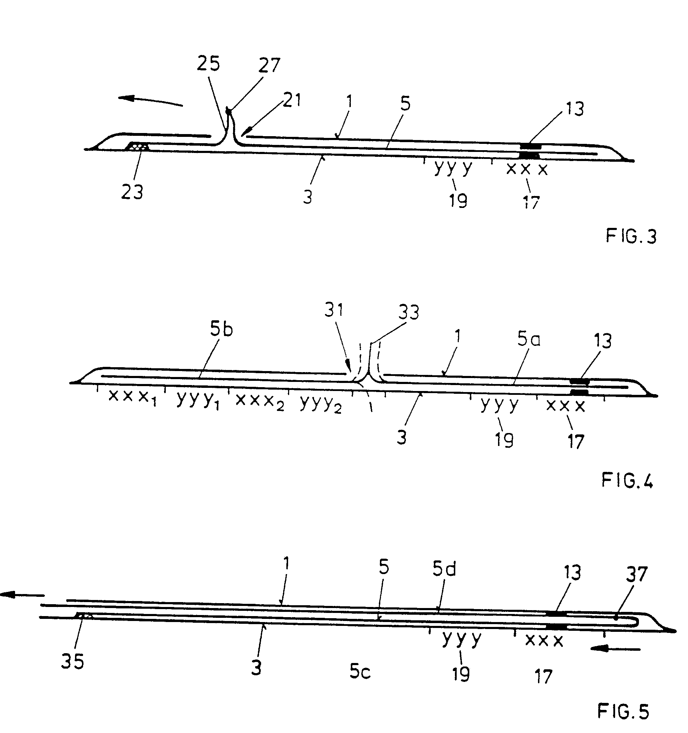

In den Fig. 3 bis 5 sind nun Ausbildungsvarianten des erfindungsgemässen Aufzeichnungsträgers dargestellt, die ein Einsehen vorab vorgesehener Information so lange verunmöglichen, bis das Zwischenblatt einen zugeordneten, selber zu beschriftenden Abschnitt freigibt.

In Fig. 3 sind die beiden Blätter 1 und 3 an ihren vier Kanten miteinander verbunden. Zwischen den Blättern 1 und 3 ist das Zwischenblatt 5 eingelegt, und, wie bei 23 dargestellt, im Bereiche der einen Blattkante mit mindestens einem der Blätter, hier mit Blatt 3, verbunden, wie verklebt. Das eine der beiden Blätter, Blatt 1, weist einen Auszugsschlitz 21 auf, aus welchem eine querausgedehnte Partie 25 des Zwischenblattes 5 auskragt. Ein zu beschriftendes Feld 17 und ein Feld 19 mit auf dem Blatt 3 innen vorab vorgesehener Information Y, wie einer Musterlösung, sind relativ zueinander so angeordnet, dass das Feld 17 für die Aufzeichnung X bezüglich der ihm zugeordneten, vorab vorgegebenen Information Y im Feld 19 näher dem Randbereich der der Verbindung 23 gegenüberliegt, angeordnet ist. Eine Einsichtnahme in die Information Y im Feld 19 ist bei der dargestellten Anordnung so lange unmöglich, als das Zwischenblatt 5 diesen Bereich abdeckt. Ist die Aufzeichnung X im Feld 17 beendet, so wird das Zwischenblatt 5 durch Ergreifen des Kragens 25 in Pfeilrichtung ausgezogen, gibt erst das Feld 17 frei, worauf die Haftstelle 13, die beiden Blätter 1 und 3 dort unlösbar verbindet. Erst dann wird das Feld 19 mit der Vorabinformation Y freigegeben. Stimmt die in Feld 17 eingetragene Lösung nicht mit der Lösung im Feld 19 überein, so ist eine Korrektur im Feld 17 nicht mehr möglich, denn das Zwischenblatt 5 kann nicht mehr dorthin zurückgeschoben werden. Zur Auszugshilfe am Kragen 25 kann dabei, wie bei 27 dargestellt, ein Verstärkungselement, wie ein dünner Draht, entlang des Zwischenblattes 5 angebracht, wie eingearbeitet sein.

In Fig. 4 ist eine weitere Ausführungsvariante des erfindungsgemässen Aufzeichnungsträgers dargestellt, bei welchem verhindert wird, dass vorab vorgesehene Information Y zu Unzeit eingesehen werden kann. Im Unterschied zur Ausführungsvariante gemäss Fig. 3 weist hier das Blatt 1 in seinem Mittenbereich einen Auszugsschlitz 31 auf und das Zwischenblatt mit einem ausragenden Auszugskragen 33 erstreckt sich, ausgehend von diesem Schlitz 31 beidseitig zwischen die Blätter 1 und 3 ein. Das Zwischenblatt 5 ist hier vorzugsweise nirgends mit einem der Blätter 1, 3 verbunden. Die Anordnung eines Aufzeichnungsfeldes 17 bezüglich eines Feldes 19 mit zugeordneter, vorab vorgesehener Information ist gleich, wie anhand von Fig. 3 erläutert wurde. Auch hier ist ein Einsehen der Information im Feld 19, bevor eine Änderung der Aufzeichnung im Feld 17 gesperrt ist, nicht möglich. Linker Hand dieser Figur ist dargestellt, wie die Abfolge von Aufzeichnungsfeldern und Feldern mit zugeordneter vorab vorgesehenen Information ausgelegt wird, angedeutet durch die Indexierung 1 bzw. 2. Anstatt eines einzigen Zwischenblattes 5 können auch zwei Blätter 5a, 5b, wie gestrichelt dargestellt, getrennt aus dem Schlitz 31 ausziehbar vorgesehen sein, allenfalls auch getrennt je durch einen Schlitz im Blatt 1 und im Blatt 3, wobei dann wiederum das Nichteinsehen der vorab vorgesehenen Information wohl erschwert, aber nicht verunmöglicht ist.

In Fig. 5 ist eine dritte bevorzugte Variante dargestellt, bei der verhindert wird, dass vorab vorgesehene Information Y in einem Feld 19 eingesehen werden kann, bevor Aufzeichnungsinformation X in einem Feld 17 nicht mehr geändert werden kann. Hier sind die beiden Blätter 1, 3 wiederum entlang dreier Kanten miteinander verbunden. Das Zwischenblatt 1 ist im offenbleibenden Randbereich mit einem der Blätter, wie bei 35 dargestellt, verbunden, wie verklebt und ragt zwischen den Blättern 1, 3 bis zum gegenüberliegenden Randbereich ein, ist dort umgelegt und läuft zurück, bis zum erstgenannten Randbereich mit der Verbindung 35. Die hin- und zurücklaufenden Schenkel 5c, 5d des Zwischenblattes 5 können dabei mit zwei Blättern realisiert werden, mit einer Klebestelle, wie bei 37 dargestellt, oder können einteilig ausgebildet sein. Anstelle eines zurücklaufenden Blattes 5d kann auch ein anders geartetes Auszugsorgan mit dem einseitig bei 35 befestigten Blattschenkel 5c an dem dieser Stelle 35 gegenüberliegenden Blattbereich befestigt sein, wie eine Auszugsleine.

Bei dieser Ausführungsvariante ist ein Einsehen des Bereiches 19 mit der vorab vorgesehenen Information Y unmöglich bis der zugeordnete Aufzeichnungsbereich 17 durch Ausziehen des Zwischenblattes in der mit dem Pfeil angedeuteten Richtung freigegeben ist, mindestens so weit, dass die Klebestelle 13 eine Änderung der Aufzeichnung im Feld 17 verunmöglicht. Dies dadurch, dass dann die Blätter 1, 3 im Feld 17 relativ unlösbar verklebt werden.

**Patentansprüche** für die Vertragsstaaten: AT, BE, DE, FR, GB, IT, LU, NL, SE

1. Verfahren zur Verhinderung einer Aufzeichnungsänderung an einem Aufzeichnungsträger mit zwei, zur Bildung einer Tasche mindestens entlang wesentlicher Randabschnitte (15) miteinander verbundenen Blättern (1, 3) und einer aus einer Taschenöffnung ausziehbaren, zwischen den Blättern liegenden Zwischenblattanordnung (5), welche bei Aufzeichnen auf das eine und/ oder andere der zwei Blätter die Aufzeichnung auf mindestens eines der sich gegenüberliegenden Blätter abbildet, wobei man ein Wiedereinschieben der einmal mindestens abschnittsweise ausgezogenen Zwischenblattanordnung (5) verhindert, dadurch gekennzeichnet, dass man die Tasche durch Verbinden der flach aufeinander gelegten Blätter (1, 3) erstellt und ein Wiedereinschieben der Zwischenblattanordnung (5) in einen Abschnitt der Tasche, woraus sie durch gleitende Ausziehbewegung entlang einer Haftschicht (13) ausgezogen worden ist, dadurch verhindert, dass man die sich zugewandten, von der Zwischenblattanordnung (5) freigelegten Seiten (1a, 3a) der Blätter (1, 3), die Tasche schliessend, mittels der Haftschicht (13) so verbindet, dass sie zerstörungsfrei wenigstens nur schwer lösbar sind.

2. Verfahren nach Anspruch 1 zur zeitgerechten Sichtbarmachung vorzugsweise vorab vorgesehener Information auf mindestens einem Abschnitt der Blätter, dadurch gekennzeichnet, dass man die Sichtbarmachung mit der Entfernung der Zwischenblattanordnung (5) aus diesem Abschnitt (19) steuert.

3. Verfahren nach einem der Ansprüche 1 oder 2, dadurch gekennzeichnet, dass die Sichtbarmachung der vorzugsweise vorab vorgesehenen Information auf dem Abschnitt (19), solange das Zwischenblatt dort nicht entfernt ist, versperrt wird.

4. Verfahren nach den Ansprüchen 1 bis 3, dadurch gekennzeichnet, dass man mit der Zwischenblattanordnung (5) ein Einsehen mindestens eines vorgegebenen Abschnittes auf mindestens einer der sich gegenüberliegenden Seiten der Blätter (1, 3) verhindert, solange die Zwischenblattanordnung nicht um ein vorgegebenes Stück zwischen den Blättern ausgezogen worden ist.

5. Aufzeichnungsträger mit zwei zur Bildung einer Tasche mindestens entlang wesentlicher Randabschnitte (15) miteinander verbundenen Blättern (1, 3), einer aus einer Öffnung der Tasche ausziehbaren Zwischenblattanordnung (5), die einen Aufzeichnungskontrast bei Aufzeichnen auf den Träger erzeugt, sowie mit einer Sperranordnung, die ein mindestens abschnittsweises Ausziehen der Zwischenblattanordnung (5) aus der Tasche zulässt, ein Wiedereinschieben jedoch verhindert, dadurch gekennzeichnet, dass die Tasche durch flaches Aufeinanderlegen und Miteinanderverbinden der Blätter (1, 3) gebildet ist und die Sperranordnung an mindestens einem vorgegebenen Bereich entlang der Auszugsbahn der Zwischenblattanordnung (5) einen Haftbereich (11) umfasst, der mindestens an bezüglich der Ausziehbewegung stromauf gelegenen Zwischenblattpartien und an in dem genannten Haftbereich gelegenen Zwischenblattpartien nicht, jedoch an den sich gegenüberliegenden Seiten (1a, 3a) der Blätter (1, 3) in diesem Bereich in der Weise haftwirksam ist, dass die Blätter zerstörungsfrei wenigstens nur schwer lösbar aneinander haften und der einen Taschenabschnitt nach dessen Freigabe von der Zwischenblattanordnung (5) schliesst, und dass die Zwischenblattanordnung (5) beim Herausziehen über eine den Haftbereich bildende Haftschicht (13) gleitet.

6. Aufzeichnungsträger nach Anspruch 5, dadurch gekennzeichnet, dass auf mindestens einem der Blätter (1, 3) Information vorab vorgesehen ist, wobei die Zwischenblattanordnung (5) diese gegen aussen mindestens uninterpretierbar macht, vorzugsweise abdeckt.

7. Aufzeichnungsträger nach einem der Ansprüche 5 oder 6, dadurch gekennzeichnet, dass mindestens ein Aufzeichnungsfeld (17) vorgesehen ist und der Haftbereich (11) so angeordnet ist, dass nach Entfernen der Zwischenblattanordnung (5) aus dem Bereich des Aufzeichnungsfeldes (17) ein Widereinbringen der Zwischenblattanordnung mindestens in diesen Bereich (17) verunmöglicht ist.

8. Aufzeichnungsträger nach Anspruch 6, dadurch gekennzeichnet, dass die Zwischenblattanordnung (5) derart angeordnet ist, dass das Einsehen der vorab vorgesehenen Information nur möglich ist, wenn ein Haftbereich (11) haftwirksam freigegeben ist, vorzugsweise ein Haftbereich (11) in einem Aufzeichnungsfeld (17), das der vorab vorgesehenen Information (19) zugeordnet ist.

9. Aufzeichnungsträger nach einem der Ansprüche 5 bis 8, dadurch gekennzeichnet, dass die Zwischenblattanordnung (5) im Bereich der Öffnung mit mindestens einem der Blätter (3) verbunden (35) ist, und dass Entfernungsorgane (5d) für das Zwischenblatt (5) vom Bereich der Öffnung her ergreifbar sind und auf die Zwischenblattanordnung (5) in einem dem Bereich der Öffnung gegenüberliegenden Randbereich einwirken.

10. Aufzeichnungsträger nach Anspruch 9, dadurch gekennzeichnet, dass die Entfernungsorgane eine Zugleine oder ein weiteres Blatt (5d) umfassen, die bzw. das am gegenüberliegenden Randbereich mit der Zwischenblattanordnung (5c) verbunden ist oder damit einteilig ausgebildet ist.

11. Aufzeichnungsträger nach einem der Ansprüche 5 bis 10, dadurch gekennzeichnet, dass die Öffnung durch nicht miteinander verbundene Randabschnitte der Blätter (1, 3) gebildet ist.

12. Aufzeichnungsträger nach einem der Ansprüche 5 bis 8, dadurch gekennzeichnet, dass die Blätter (1, 3) rundum an ihren Randabschnitten miteinander verbunden sind und mindestens am einen der Blätter ein Auszugsschlitz (21, 31) angeordnet ist, für die Zwischenblattanordnung (5).

13. Aufzeichnungsträger nach Anspruch 12, dadurch gekennzeichnet, dass der Auszugsschlitz (21) im Bereich eines Randabschnittes angeordnet ist und dass die Zwischenblattanordnung (5) in diesem Bereich (23) mindestens an einem der Blätter (1, 3) befestigt ist.

14. Aufzeichnungsträger nach Anspruch 12, dadurch gekennzeichnet, dass der Auszugsschlitz (31) im Mittenbereich mindestens eines der Blätter (1, 3) angeordnet ist, und dass vorzugsweise die Zwischenblattanordnung vom Schlitzbereich beidseitig zwischen die Blätter (1, 3) einragt.

15. Anwendung des Verfahrens nach einem der Ansprüche 1 bis 4, oder des Aufzeichnungsträgers nach einem der Ansprüche 5 bis 14 zur Verunmöglichung einer Abänderung einer vorgenommenen Aufzeichnung an Urkundenformularen, Unterrichtsbogen, Kreditformularen, Kreditkarten.

**Patentansprüche** für die Vertragsstaten: CH/LI

1. Verfahren zur Verhinderung einer Aufzeichnungsänderung an einem Aufzeichnungsträger mit zwei, zur Bildung einer Tasche mindestens entlang wesentlicher Randabschnitte (15) miteinander verbundenen Blättern (1, 3) und einer aus einer Taschenöffnung ausziehbaren, zwischen den Blättern liegenden Zwischenblattanordnung (5), welche bei Aufzeichnen auf das eine und/oder andere der zwei Blätter die Aufzeichnung auf mindestens eines der sich gegenüberliegenden Blätter abbildet, wobei man ein Wiedereinschieben der einmal mindestens abschnittsweise ausgezogenen Zwischenblattanordnung (5) verhindert, dadurch gekennzeichnet, dass man die Tasche durch Verbinden der flach aufeinander gelegten Blätter (1, 3) erstellt und ein Wiedereinschieben der Zwischenblattanordnung (5) in einen Abschnitt der Tasche, woraus sie durch gleitende Ausziehbewegung entlang einer Haftschicht (13) ausgezogen worden ist, dadurch verhindert, dass man die sich zugewandten, von der Zwischenblattanordnung (5) freigelegten Seiten (1a, 3a) der Blätter (1, 3), die Tasche schliessend, mittels der Haftschicht (13) so verbindet, dass sie zerstörungsfrei wenigstens nur schwer lösbar sind, wobei man mit der Zwischenblattanordnung (5) ein Einsehen mindestens eines vorgegebenen Abschnittes auf mindestens einer der sich gegenüberliegenden Seiten der Blätter (1, 3) verhindert, solange die Zwischenblattanordnung nicht um ein vorgegebenes Stück zwischen den Blättern (1, 3) ausgezogen worden ist.

2. Verfahren nach Anspruch 1 zur zeitgerechten Sichtbarmachung vorzugsweise vorab vorgesehener Information auf mindestens einem Abschnitt der Blätter, dadurch gekennzeichnet, dass man die Sichtbarmachung mit der Entfernung der Zwischenblattanordnung (5) aus diesem Abschnitt (19) steuert.

3. Verfahren nach einem der Ansprüche 1 oder 2, dadurch gekennzeichnet, dass die Sichtbarmachung der vorzugsweise vorab vorgesehenen Information auf dem Abschnitt (19), solange das Zwischenblatt dort nicht entfernt ist, versperrt wird.

4. Aufzeichnungsträger mit zwei zur Bildung einer Tasche mindestens entlang wesentlicher Randabschnitte (15) miteinander verbundenen Blättern (1, 3), einer aus einer Öffnung der Tasche ausziehbaren Zwischenblattanordnung (5), die einen Aufzeichnungskontrast bei Aufzeichnen auf den Träger erzeugt, sowie mit einer Sperranordnung, die ein mindestens abschnittsweises Ausziehen der Zwischenblattanordnung (5) aus der Tasche zulässt, ein Wiedereinschieben jedoch verhindert, dadurch gekennzeichnet, dass die Tasche durch flaches Aufeinanderlegen und Miteinanderverbinden der Blätter (1, 3) gebildet ist und die Sperranordnung an mindestens einem vorgegebenen Bereich entlang der Auszugsbahn der Zwischenblattanordnung (5) einen Haftbereich (11) umfasst, der mindestens an bezüglich der Ausziehbewegung stromauf gelegenen Zwischenblattpartien und an in dem genannten Haftbereich gelegenen Zwischenblattpartien nicht, jedoch an den sich gegenüberliegarden Seiten (1a, 3a) der Blätter (1, 3) in diesem Bereich in der Weise haftwirksam ist, dass die Blätter zerstörungsfrei wenigstens nur schwer lösbar aneinander haften, und der einen Taschenabschnitt nach dessen Freigabe von der Zwischenblattanordnung (5) schliesst, und dass die Zwischenblattanordnung (5) beim Herausziehen über eine den Haftbereich bildende Haftschicht (13) gleitet, wobei die Blätter (13) mit der Zwischenblattanordnung (5) so ausgebildet sind, dass ein Einsehen mindestens eines vorgegebenen Abschnittes auf mindestens einer der sich gegenüberliegenden Seiten der Blätter (1, 3) verhindert ist, solange die Zwischenblattanordnung nicht um ein vorgegebenes Stück zwischen den Blättern (1, 3) ausgezogen ist.

5. Aufzeichnungsträger nach Anspruch 4, dadurch gekennzeichnet, dass auf mindestens einem der Blätter (1, 3) Information vorab vorgesehen ist, wobei die Zwischenblattanordnung (5) diese gegen aussen mindestens uninterpretierbar macht, vorzugsweise abdeckt.

6. Aufzeichnungsträger nach einem der Ansprüche 4 oder 5, dadurch gekennzeichnet, dass mindestens ein Aufzeichnungsfeld (17) vorgesehen ist und der Haftbereich (11) so angeordnet ist, dass nach Entfernen der Zwischenblattanordnung (5) aus dem Bereich des Aufzeichnungsfeldes (17) ein Wiedereinbringen der Zwischenblattanordnung mindestens in diesen Bereich (17) verunmöglicht ist.

7. Aufzeichnungsträger nach Anspruch 5, dadurch gekennzeichnet, dass die Zwischenblattanordnung (5) derart angeordnet ist, dass das Einsehen der vorab vorgesehenen Information nur möglich ist, wenn ein Haftbereich (11) haftwirksam freigegeben ist, vorzugsweise ein Haftbereich (11) in einem Aufzeichnungsfeld (17), das der vorab vorgesehenen Information (19) zugeordnet ist.

8. Aufzeichnungsträger nach einem der Ansprüche 4 bis 7, dadurch gekennzeichnet, dass die Zwischenblattanordnung (5) im Bereich der Öffnung mit mindestens einem der Blätter (3) verbunden (35) ist, und dass Entfernungsorgane (5d) für das Zwischenblatt (5) vom Bereich der Öffnung her ergreifbar sind und auf die Zwischenblattanordnung (5) in einem dem Bereich der Öffnung gegenüberliegenden Randbereich einwirken.

9. Aufzeichnungsträger nach Anspruch 8, dadurch gekennzeichnet, dass die Entfernungsorgane eine Zugleine oder ein weiteres Blatt (5d) umfassen, die bzw. das am gegenüberliegenden Randbereich mit der Zwischenblattanordnung (5c) verbunden ist oder damit einteilig ausgebildet ist.

10. Aufzeichnungsträger nach einem der Ansprüche 4 bis 9, dadurch gekennzeichnet, dass die Öffnung durch nicht miteinander verbundene Randabschnitte der Blätter (1, 3) gebildet ist.

11. Aufzeichnungsträger nach einem der Ansprüche 4 bis 7, dadurch gekennzeichnet, dass die Blätter (1, 3) rundum an ihren Randabschnitten miteinander verbunden sind und mindestens am einen der Blätter ein Auszugsschlitz (21, 31) angeordnet ist, für die Zwischenblattanordnung (5).

12. Aufzeichnungsträger nach Anspruch 11, dadurch gekennzeichnet, dass der Auszugsschlitz (21) im Bereich eines Randabschnittes angeordnet ist und dass die Zwischenblattanordnung (5) in diesem Bereich (23) mindestens an einem der Blätter (1, 3) befestigt ist.

13. Aufzeichnungsträger nach Anspruch 11, dadurch gekennzeichnet, dass der Auszugsschlitz (31) im Mittenbereich mindestens eines der Blätter (1, 3) angeordnet ist, und dass vorzugsweise die Zwischenblattanordnung vom Schlitzbereich beidseitig zwischen die Blätter (1, 3) einragt.

14. Anwendung des Verfahrens nach einem der Ansprüche 1 bis 3 oder des Aufzeichnungsträgers nach einem der Ansprüche 4 bis 13 zur Verunmöglichung einer Abänderung einer vorgenommenen Aufzeichnung an Urkundenformularen, Unterrichtsbogen, Kreditformularen, Kreditkarten.

**Claims for the Contracting States: AT, BE, DE, FR, GB, IT, LU, NL, SE**

1. Process for preventing a record change on a record medium having two sheets (1, 3) joined together at least along major edge sections (15), which sheets form thus a pocket, and with an intermediate sheet (5) lying between said sheets, which can be withdrawn from a pocket opening, this intermediate sheet copying a record made on one or other or both of the sheets on to at least one of the sheets that face each other, reinsertion of said intermediate sheet (5) being hindered once it has been withdrawn at least partly; said process being characterized in that the pocket is formed by joining the sheets (1, 3) to lie flat on top of each other, and in that a reinsertion of said intermediate sheet (5) into a section of the pocket, from which it has been withdrawn by a sliding extraction movement over a bonding layer (13), is prevented by joining together of the sides (1a, 3a) of the pocket-forming sheets (1, 3) so as to close the pocket, where they face each other but lie clear of the intermediate sheet (5), by means of the bonding layer (13) in such a way that they can be separated without being damaged or destroyed, only with the greatest difficulty.

2. Process according to claim 1 for displaying at the right time a record of information, preferably provided beforehand, on at least one section of the sheets, characterized in that the record display is controlled by the removal of the intermediate sheet arrangement (5) from this section (19).

3. Process according to one of claims 1 or 2, characterized in that the display of the information record, preferably provided beforehand, on the section (19) is blocked, provided that the intermediate sheet is not removed from that section.

4. Process according to claims 1 to 3, characterized in that with the intermediate sheet (5) one prevents viewing of at least one predetermined section on at least one of the sides of the sheets (1, 3) lying opposite each other, provided that the intermediate sheet arrangement has not been withdrawn by a predetermined amount from between the sheets.

5. Record support having two sheets (1, 3) joined together at least along major edge sections (15), which sheets form thus a pocket, with an intermediate sheet arrangement (5) which can be withdrawn from an opening of the pocket, and which produces legibility a of record made on the support, and also with a blocking arrangement which allows the intermediate sheet arrangement (5) to be drawn out of the pocket at least by a section thereof, but which prevents it from being reinserted; said record support being characterized in that the pocket is formed by laying said sheets (1, 3) flat on top of each other and bonding them together, and in that said blocking arrangement comprises an adhesive area (11) at at least one given area along the withdrawal track of said intermediate sheet arrangement (5), which adhesive area is ineffective at least on sections of the intermediate sheet arrangement disposed upstream said area with respect to withdrawal movement, and on an area of said intermediate sheet arrangement laying on said adhesive area, but which is effective on the sides (1a, 3a) of the sheets (1, 3) lying against each other in this area, so as to stick the sheets to each other so that, without being destroyed or damaged, the sheets can then be separated only with difficulty, said adhesive area thus sealing a pocket section after withdrawal of the intermediate sheet arrangement (5) from said pocket section, the intermediate sheet arrangement (5), when being withdrawn, sliding over an adhesive layer (13) which forms the adhesive area.

6. Record support according to claim 5, characterized in that on at least one of the sheets (1, 3) information is provided beforehand, and the intermediate sheet (5) renders said information at least impossible to interpret from outside and preferably conceals it.

7. Record support according to one of claims 5 or 6, characterized in that at least one recording area (17) is provided and the adhesive area (11) is positioned in such a way that after the removal of the intermediate sheet arrangement (5) from the recording area (17) a reinsertion of the intermediate sheet arrangement is made impossible, at least into this area (17).

8. Record support according to claim 6, characterized in that the intermediate sheet arrangement (5) is arranged in such a way that the previously provided information can be accessed only if an adhesive area (11) is activated, preferably an adhesive area (11) at a record field (1) to which the previously provided information (19) is assigned.

9. Record support according to one of claims 5 to 8, characterized in that in the area of the opening the intermediate sheet arrangement (5) is joined (35) to at least one of the sheets (3) and in that components (5d) for removing the intermediate sheet (5) can be seized from the area of the opening and act upon the intermediate sheet arrangement (5) at an edge area opposite from the opening area.

10. Record support according to claim 9, characterized in that the removing components comprise a string or cord for withdrawing the intermediate sheet, or a further sheet (5d), either of which is, at the opposite edge area, joined to the intermediate sheet arrangement (5c) or incorporated with it as one unit.

11. Record support according to one of the claims 5 to 19, characterized in that the opening is formed by edge sections of the sheets (1, 3), which sections are not joined together.

12. Record support according to one of claims 5 to 8, characterized in that the sheets (1, 3) are joined together completely around their edges and in that in at least one of the sheets a withdrawal slot (21, 31) is provided, via which the intermediate sheet arrangement (5) can be withdrawn.

13. Record support according to claim 12, characterized in that the withdrawal slot (21) is situated in the region of an edge margin and in that the intermediate sheet arrangement (5) in this region (23) is joined to at least one of the sheets (1, 3).

14. Record support according to claim 12, characterized in that the withdrawal slot (31) is situated in the central area of at least one of the sheets (1, 3), and in that, preferably, the intermediate sheet arrangement extends between the sheets (1, 3) departing from both sides of the slot area.

15. The use of the process according to one of claims 1 to 4, or of the record support according to one of claims 5 to 14, in order to prevent any modification of a record made of documentary schedules or forms, instruction sheets, credit forms, and credit cards.

**Claims the Contracting States: CH/LI**

1. Process for preventing a record change on a record medium having two sheets (1, 3) joined together at least along major edge sections (15), which sheets form thus a pocket, and with an intermediate sheet (5) lying between said sheets, which can be withdrawn from a pocket opening, this intermediate sheet copying a record made on one or other or both of the sheets on to at least one of the sheets that face each other, reinsertion of said intermediate sheet (5) being hindered once it has been withdrawn at least partly; said process being characterized in that the pocket is formed by joining the sheets (1, 3) to lie flat on top of each other, and in that a reinsertion of said intermediate sheet (5) into a section of the pocket, from which it has been withdrawn by a sliding extraction movement over a bonding layer (13), is prevented by joining together of the sides (1a, 3a) of the pocket-forming sheets (1, 3) so as to close the pocket, where they face each other but lie clear of the intermediate sheet (5), by means of the bonding layer (13) in such a way that they can be separated without being damaged or destroyed, only with the greatest difficulty, the intermediate sheet (5) preventing viewing of at least one predetermined section on at least one of the sides of the sheets (1, 3) lying opposite each other, provided the intermediate sheet has not been withdrawn by a predetermined amount from between the sheets (1, 3).

2. Process according to claim 1 for displaying at the right time a record of information, preferably provided beforehand, on at least one section of the sheets, characterized in that the record display is controlled by the removal of the intermediate sheet arrangement (5) from this section (19).

3. Process according to one of claims 1 or 2, characterized in that the display of the information record, preferably provided beforehand, on the section (19) is blocked, provided that the intermediate sheet is not removed from that section.

4. Record support having two sheets (1, 3) joined together at least along major edge sections (15), which sheets form thus a pocket, with an intermediate sheet arrangement (5) which can be withdrawn from an opening of the pocket, and which produces legibility a of record made on the support, and also with a blocking arrangement which allows the intermediate sheet arrangement (5) to be drawn out of the pocket at least by a section thereof, but which prevents it from being reinserted; said record support being characterized in that the pocket is formed by laying said sheets (1, 3) flat on top of each other and bonding them together, and in that said blocking arrangement comprises an adhesive area (11) at at least one given area along the withdrawal track of said intermediate sheet arrangement (5), which adhesive area is ineffective at least on sections of the intermediate sheet arrangement disposed upstream said area with respect to withdrawal movement, and on an area of said intermediate sheet arrangement laying on said adhesive area, but which is effective on the sides (1a, 3a) of the sheets (1, 3) lying against each other in this area, so as to stick the sheets to each other so that, without being destroyed or damaged, the sheets can then be separated only with difficulty, said adhesive area thus sealing a pocket section after withdrawal of the intermediate sheet arrangement (5) from said pocket section, the intermediate sheet arrangement (5), when being withdrawn, sliding over an adhesive layer (13) which forms the adhesive area, the sheets (13) with the intermediate sheet arrangement (5) being so arranged that viewing of at least one predetermined section on at least one of the sides of the sheets (1, 3) lying opposite each other is prevented, provided the intermediate sheet has not been withdrawn by a predetermined amount from between the sheets (1, 3).

5. Record support according to claim 4, characterized in that on at least one of the sheets (1, 3) information is provided beforehand, and the intermediate sheet (5) renders said information at least impossible to interpret from outside and preferably conceals it.

6. Record support according to one of claims 4 or 5, characterized in that at least one recording area (17) is provided and the adhesive area (11) is positioned in such a way that after the removal of the intermediate sheet arrangement (5) from the recording area (17) a reinsertion of the intermediate sheet arrangement is made impossible, at least into this area (17).

7. Record support according to claim 5, characterized in that the intermediate sheet arrangement (5) is arranged in such a way that the previously provided information can be accessed only if an adhesive area (11) is activated, preferably an adhesive area (11) at a record field (1) to which the previously provided information (19) is assigned.

8. Record support according to one of claims 4 to 7, characterized in that in the area of the opening the intermediate sheet arrangement (5) is joined (35) to at least one of the sheets (3) and in that components (5d) for removing the intermediate sheet (5) can be seized from the area of the opening and act upon the intermediate sheet arrangement (5) at an edge area opposite from the opening area.

9. Record support according to claim 8, characterized in that the removing components comprise a string or cord for withdrawing the intermediate sheet, or a further sheet (5d), either of which is, at the opposite edge area, joined to the intermediate sheet arrangement (5c) or incorporated with it as one unit.

10. Record support according to one of the claims 4 to 9, characterized in that the opening is formed by edge sections of the sheets (1, 3), which sections are not joined together.

11. Record support according to one of claims 4 to 7, characterized in that the sheets (1, 3) are joined together completely around their edges and in that in at least one of the sheets a withdrawal slot (21, 31) is provided, via which the intermediate sheet arrangement (5) can be withdrawn.

12. Record support according to claim 11, characterized in that the withdrawal slot (21) is situated in the region of an edge margin and in that the intermediate sheet arrangement (5) in this region (23) is joined to at least one of the sheets (1, 3).

13. Record support according to claim 11, characterized in that the withdrawal slot (31) is situated in the central area of at least one of the sheets (1, 3), and in that, preferably, the intermediate sheet arrangement extends between the sheets (1, 3) departing from both sides of the slot area.

14. The use of the process according to one of claims 1 to 3, or of the record support according to one of claims 4 to 13, in order to prevent any modification of a record made of documentary schedules or forms, instruction sheets, credit forms, and credit cards.

**Revendications** pour les Etats Contractants : AT, BE, DE, FR, GB, IT, LU, NL, SE.

1. Procédé pour empêcher une modification d'enregistrement sur un support d'enregistrement comportant deux feuilles (1, 3) reliées entre elles au moins le long de sections marginales importantes (15) pour former une poche, et un dispositif (5) formant feuille intercalaire, pouvant être retiré d'une ouverture de la poche, situé entre les feuilles et qui lors de l'enregistrement sur l'une et/ou sur l'autre des deux feuilles, reproduit l'enregistrement sur au moins l'une des feuilles en vis-à-vis, selon lequel on empêche une réinsertion du dispositif (5) formant feuille intercalaire, une fois ressorti au moins partiellement, caractérisé en ce qu'on forme la poche en réunissant les feuilles (1, 3) appliquées à plat l'une sur l'autre et on empêche une réinsertion du dispositif (5) formant feuille intercalaire, dans une section de la poche hors de laquelle il a été retiré par un mouvement de retrait avec glissement le long d'une couche adhésive (13), grâce au fait qu'on relie, au moyen de la couche adhésive (13), les faces (1a, 3a) des feuilles (1, 3) qui sont tournées l'une vers l'autre et libérées par le dispositif (5) formant feuille intercalaire, en fermant la poche, de sorte que les faces des feuilles sont détachables sans destruction au moins seulement difficilement.

2. Procédé selon la revendication 1, permettant de rendre visible, en temps opportun, une information prévue de préférence préalablement sur au moins une section des feuilles, caractérisé en ce que l'on commande le dévoilement au moyen du retrait du dispositif (5) formant feuille intercalaire hors de cette section (19).

3. Procédé selon l'une des revendications 1 ou 2, caractérisé en ce que le dévoilement de l'information prévue de préférence préalablement sur la section (19) est empêché tant que la feuille intercalaire n'en est pas encore retirée.

4. Procédé selon les revendications 1 à 3, caractérisé en ce qu'à l'aide du dispositif (5) formant feuille intercalaire, on empêche l'observation d'au moins une section prédéterminée sur au moins l'une des faces, situées en vis-à-vis, des feuilles (1, 3), tant que le dispositif formant feuille intercalaire n'a pas été retiré, sur une longueur prédéterminée, entre les feuilles.

5. Support d'enregistrement comportant deux feuilles (1, 3) reliées entre elles au moins le long de sections marginales importantes (15) pour former une poche, un dispositif (5) formant feuille intercalaire, qui peut être retiré d'une ouverture de la poche et produit un contraste d'enregistrement lors de l'enregistrement sur le support, ainsi qu'un dispositif de blocage qui autorise un retrait au moins partiel du dispositif (5) formant feuille intercalaire hors de la poche, tout en empêchant une réinsertion, caractérisé en ce que la poche est formée par application à plat l'une sur l'autre et réunion des feuilles (1, 3) et en ce que le dispositif de blocage comporte, dans au moins une zone prédéterminée le long de la voie d'extraction du dispositif (5) formant feuille intercalaire, une zone adhésive (11) qui ne présente aucun effet adhésif au moins envers des parties de la feuille intercalaire qui sont situées en amont dans la direction d'extraction, et envers des parties de la feuille intercalaire qui sont situées dans ladite zone adhésive, mais a un effet adhésif sur les faces (1a, 3a) des feuilles (1, 3) qui sont situées en vis-à-vis dans cette zone, de sorte que les feuilles adhèrent entre elles de manière à être détachables sans destruction au moins seulement difficilement, et ferme une section de la poche, après sa libération par le dispositif (5) formant feuille intercalaire, et en ce que le dispositif (5) glisse, lors de l'extraction, le long d'une couche adhésive (13) formant la zone adhésive.

6. Support d'enregistrement selon la revendication 5, caractérisé en ce qu'une information est prévue préalablement au moins sur l'une des feuilles (1, 3), le dispositif (5) formant feuille intercalaire rendant au moins une interprétation de cette information impossible à partir de l'extérieur, en masquant de préférence cette information.

7. Support d'enregistrement selon l'une des revendications 5 ou 6, caractérisé en ce qu'il est prévu au moins une zone d'enregistrement (17), et en ce que la zone adhésive (11) est disposée de telle sorte, qu'après le retrait du dispositif (5) formant feuille intercalaire hors de la zone d'enregistrement (17), une réinsertion du dispositif formant feuille intercalaire est impossible au moins dans cette zone (17).

8. Support d'enregistrement selon la revendication 6, caractérisé en ce que le dispositif (5) formant feuille intercalaire est disposé de telle sorte que l'observation de l'information prévue préalablement n'est possible que lorsqu'une zone adhésive (11) est libérée de manière à pouvoir produire son effet adhésif, de préférence une zone adhésive (11) située dans une zone d'enregistrement (17) qui est associée à l'information (19) prévue préalablement.

9. Support d'enregistrement selon l'une des revendications 5 à 8, caractérisé en ce que le dispositif (5) formant feuille intercalaire est relié (35), dans la zone de l'ouverture, à au moins l'une des feuilles (3), et en ce que des organes (5d) utilisés pour le retrait de la feuille intercalaire (5) peuvent être saisis à partir de la zone de l'ouverture et agissent sur le dispositif (5) formant feuille intercalaire, dans une zone marginale située à l'opposé de la zone de l'ouverture.

10. Support d'enregistrement selon la revendication 9, caractérisé en ce que les organes de retrait comportent une corde de traction ou une autre feuille (5d), qui est reliée, au niveau de la zone marginale opposée, au dispositif (5c) formant feuille intercalaire ou est formée d'un seul tenant avec ce dispositif.

11. Support d'enregistrement selon l'une des revendications 5 à 10, caractérisé en ce que l'ouverture est formée par des zones marginales, non reliées entre elles, des feuilles (1, 3).

12. Support d'enregistrement selon l'une des revendications 5 à 8, caractérisé en ce que les feuilles (1, 3) sont reliées entre elles sur le pourtour de leurs sections marginales et en ce qu'une fente (21, 31) permettant l'extraction du dispositif (5) formant feuille intercalaire est ménagée au moins dans l'une des feuilles.

13. Support d'enregistrement selon la revendication 12, caractérisé en ce que la fente d'extraction (31) est située dans la zone d'une section marginale, et en ce que le dispositif (5) formant feuille intercalaire est fixé, dans cette zone (23), au moins à l'une des feuilles (1, 3).

14. Support d'enregistrement selon la revendication 12, caractérisé en ce que la fente d'extraction (31) est disposée dans la zone médiane d'au moins l'une des feuilles (1, 3), et en ce que le dispositif formant feuille intercalaire pénètre, à partir de la zone de la fente, de préférence des deux côtés, entre les feuilles (1, 3).

15. Utilisation du procédé selon l'une des revendications 1 à 4 ou du support d'enregistrement selon l'une des revendications 5 à 14 en vue de rendre impossible une modification de l'enregistrement réalisé sur des formulaires d'actes, des feuilles de rapport, des formulaires de crédit et des cartes de crédit.

**Revendication** les Etats Contractants : CH/LI.

1. Procédé pour empêcher une modification d'enregistrement sur un support d'enregistrement comportant deux feuilles (13) reliées entre elles au moins le long de sections marginales importantes (15) pour former une poche, et un dispositif (5) formant feuille intercalaire, pouvant être retiré d'une ouverture de la poche, situé entre les feuilles et qui lors de l'enregistrement sur l'une et/ou sur l'autre des deux feuilles, reproduit l'enregistrement sur au moins l'une des feuilles en vis-à-vis, selon lequel on empêche une réinsertion du dispositif (5) formant feuille intercalaire, une fois ressorti au moins partiellement, caractérisé en ce qu'on forme la poche en réunissant les feuilles (1, 3) appliquées à plat l'une sur l'autre et on empêche une réinsertion du dispositif (5) formant feuille intercalaire, dans une section de la poche hors de laquelle il a été retiré par un mouvement de retrait avec glissement le long d'une couche adhésive (13), grâce au fait qu'on relie, au moyen de la couche adhésive (13), les faces (1a, 3a) des feuilles (1, 3) qui sont tournées l'une vers l'autre et libérées par le dispositif (5) formant feuille intercalaire, en fermant la poche, de sorte que les faces des feuilles sont détachables sans destruction au moins seulement difficilement, auquel cas on empêche, à l'aide du dispositif (5) formant feuille intercalaire, l'observation d'au moins une section prédéterminée sur au moins l'une des faces des feuilles (1, 3) qui sont situées en vis-à-vis, tant que le dispositif formant feuille intercalaire n'a pas été retiré, sur une longueur prédéterminée, entre les feuilles (1, 3).

2. Procédé selon la revendication 1, permettant de rendre visible, en temps opportun, une information prévue de préférence préalablement sur au moins une section des feuilles, caractérisé en ce que l'on commande le dévoilement au moyen du retrait du dispositif (5) formant feuille intercalaire hors de cette section (19).

3. Procédé selon l'une des revendications 1 ou 2, caractérisé en ce que le dévoilement de l'information prévue de préférence préalablement sur la section (19) est empêchée tant que la feuille intercalaire n'en est pas encore retirée.

4. Support d'enregistrement comportant deux feuilles (1, 3) reliées entre elles au moins le long de sections marginales importantes (15) pour former une poche, un dispositif (5) formant feuille intercalaire, qui peut être retiré d'une ouverture de la poche et produit un contraste d'enregistrement lors de l'enregistrement sur le support, ainsi qu'un dispositif de blocage qui autorise un retrait au moins partiel du dispositif (5) formant feuille intercalaire hors de la poche, tout en empêchant une réinsertion, caractérisé en ce que la poche est formée par application à plat l'une sur l'autre et réunion des feuilles (13) et en ce que le dispositif de blocage comporte, dans au moins une zone prédéterminée le long de la voie d'extraction du dispositif (5) formant feuille intercalaire, une zone adhésive (11) qui ne présente aucun effet adhésif au moins envers des parties de la feuille intercalaire qui sont situées en amont dans la direction d'extraction, et envers des parties de la feuille intercalaire qui sont situées dans ladite zone adhésive, mais a un effet adhésif sur les faces (1a, 3a) des feuilles (1, 3) qui sont situées en vis-à-vis dans cette zone, de sorte que les feuilles adhèrent entre elles de manière à être détachables sans destruction au moins seulement difficilement, et ferme une section de la poche, après sa libération par le dispositif (5) formant feuille intercalaire, et en ce que le dispositif (5) glisse, lors de l'extraction, le long d'une couche adhésive (13) formant la zone adhésive, les feuilles (13) ainsi que le dispositif (5) formant feuille intercalaire étant agencés de telle sorte qu'une observation d'au moins une section prédéterminée sur au moins l'une des faces des feuilles (1, 3) qui sont situées en vis-à-vis, est empêchée tant que le dispositif formant feuille intercalaire n'est pas ressorti sur une distance prédéterminée entre les feuilles (1, 3).

5. Support d'enregistrement selon la revendication 4, caractérisé en ce qu'une information est prévue préalablement au moins sur l'une des feuilles (1, 3), le dispositif (5) formant feuille intercalaire rendant au moins une interprétation de cette information impossible à partir de l'extérieur, en masquant de préférence cette information.

6. Support d'enregistrement selon l'une des revendications 4 ou 5, caractérisé en ce qu'il est prévu au moins une zone d'enregistrement (17), et en ce que la zone adhésive (11) est disposée de telle sorte, qu'après le retrait du dispositif (5) formant feuille intercalaire hors de la zone d'enregistrement (17), une réinsertion du dispositif formant feuille intercalaire est impossible au moins dans cette zone (17).

7. Support d'enregistrement selon la revendication 5, caractérisé en ce que le dispositif (5) formant feuille intercalaire est disposé de telle sorte que l'observation de l'information prévue préalablement n'est possible que lorsqu'une zone adhésive (11) est libérée de manière à pouvoir produire son effet adhésif, de préférence une zone adhésive (11) située dans une zone d'enregistrement (17) qui est associée à l'information (19) prévue préalablement.

8. Support d'enregistrement selon l'une des revendications 4 à 7, caractérisé en ce que le dispositif (5) formant feuille intercalaire est relié (35), dans la zone de l'ouverture, à au moins l'une des feuilles (3), et en ce que des organes (5d) utilisés pour le retrait de la feuille intercalaire (5) peuvent être saisis à partir de la zone de l'ouverture et agissent sur le dispositif (5) formant feuille intercalaire, dans une zone marginale située à l'opposé de la zone de l'ouverture.

9. Support d'enregistrement selon la revendication 8, caractérisé en ce que les organes de retrait comportent une corde de traction ou une autre feuille (5d), qui est reliée, au niveau de la zone marginale opposée, au dispositif (5c) formant feuille intercalaire ou est formée d'un seul tenant avec ce dispositif.

10. Support d'enregistrement selon l'une des revendications 4 à 9, caractérisé en ce que l'ouverture est formée par des zones marginales, non reliées entre elles, des feuilles (1, 3).

11. Support d'enregistrement selon l'une des revendications 4 à 7, caractérisé en ce que les feuilles (1, 3) sont reliées entre elles sur le pourtour de leurs sections marginales et en ce qu'une

23

fente (21, 31) permettant l'extraction du dispositif (5) formant feuille intercalaire est ménagée au moins dans l'une des feuilles.

12. Support d'enregistrement selon la revendication 11, caractérisé en ce que la fente d'extraction (31) est située dans la zone d'une section marginale, et en ce que le dispositif (5) formant feuille intercalaire est fixé, dans cette zone (23), au moins à l'une des feuilles (1, 3).

13. Support d'enregistrement selon la revendication 11, caractérisé en ce que la fente d'extraction (31) est disposée dans la zone médiane d'au moins l'une des feuilles (1, 3), et en ce que le dispositif formant feuille intercalaire pénètre, à partir de la zone de la fente, de préférence, des deux côtés, entre les feuilles (1, 3).

14. Utilisation du procédé selon l'une des revendications 1 ou 3 ou du support d'enregistrement selon l'une des revendications 4 à 13 en vue de rendre impossible une modification de l'enregistrement réalisé sur des formulaires d'actes, des feuilles de rapport, des formulaires de crédit et des cartes de crédit.

FIG. 1a

FIG. 1b

FIG. 1c

FIG. 2a

FIG. 2b

FIG. 2c

FIG. 3

FIG. 4

FIG. 5